# EUROPEAN PATENT SPECIFICATION

(11) **EP 2 679 959 B1**
(45) Date of publication and mention of the grant of the patent: **27.03.2019**
(21) Application number: 13171568.2
(22) Date of filing: 11.06.2013
(51) Int. Cl.: G01C 23/00, G08G 5/00

(54) **AVIONICS DISPLAY SYSTEM PROVIDING ENHANCED FLIGHT-PLAN MANAGEMENT**
AVIONIKANZEIGESYSTEM ZUR BEREITSTELLUNG ERWEITERTER FLUGPLANVERWALTUNG
SYSTÈME D'AFFICHAGE AVIONIQUE ASSURANT UNE MEILLEURE GESTION DE PLAN DE VOL

(30) Priority: 25.06.2012 US 201213531786
(43) Date of publication of application: 01.01.2014
(73) Proprietor: Honeywell International Inc., Morris Plains, NJ 07950 (US)
(72) Inventor: Parthasarathy, Sudarshan, Morristown, NJ 07962-2245 (US)
(74) Representative: Houghton, Mark Phillip

(56) References cited:
- EP-A2- 2 362 183
- US-B1- 6 633 810
- US-B1- 8 380 366
- Inc. Autodesk: "AutoCAD User's Guide", , 1 January 2012 (2012-01-01), pages iii-846, XP055309553, Retrieved from the Internet: URL:http://docs.autodesk.com/ACDMAC/2013/E NU/PDFs/acdmac_2013_users_guide.pdf [retrieved on 2016-10-11]

## Description

### TECHNICAL FIELD

The present invention relates generally to vehicular display systems and, more particularly, to an avionics display system and method for providing enhanced flight-plan management utilizing direct graphical entry and immediate display feedback Such systems and methods are known in the art; see, for instance, EP2362183.

### BACKGROUND

A pilot is faced with two major tasks; i.e. (1) to accurately determine and remain constantly aware of the current aircraft status including direction, speed, altitude, location and the rates of change of each; and (2) to quickly and accurately control the aircraft to effectuate a change in these parameters to achieve a desired status of the aircraft including, for example, setting or altering the aircraft's flight-plan.

To this end, avionics display systems deployed aboard aircraft has been extensively engineered to visually convey a considerable amount of flight information in an intuitive and readily comprehendible manner. In conventional avionics display systems, much of the information visually expressed on a cockpit display, (e.g., a primary flight display, a navigation display, etc.) pertains to aircraft parameters (e.g., the heading, drift, roll, and pitch of the host aircraft), nearby geographical features (e.g., mountain peaks, runways, etc.), and current weather conditions (e.g. developing storm cells).

A further improvement occurred with the introduction of flight management systems, a type of specialized computer that includes a database of pre-stored navigation landmark, such as an airport, or may represent an imaginary intersection in the sky. A pilot may enter a flight plan by selecting a sequential series of waypoints through which the aircraft will travel.

System integrators have built flight control systems that facilitate the use of avionics systems; e.g., the PRIMUS EPIC suite of integrated flight electronics such as flight management systems, autopilots, cockpit displays, flight controls, and the like, as well as interoperability with navigational instruments such as global positioning systems (GPS), inertial reference systems (IRS), and the like. In particular, the PRIMUS EPIC suite includes an integrated avionics display that includes cursor control, windowing of information, movable navigation maps, ground-based weather, real-time video, aircraft utility system display and control, and the like. The PRIMUS EPIC suite includes a "point-and-click" navigation capability referred to as "Graphical INAV." As part of the "point-and-click" functionality, pilots may click on a map location (e.g. waypoint) to obtain a menu of the tasks that may be executed with respect to that location. An interface for obtaining additional information is presented to the pilot, and the pilot enters information with a keyboard, mouse/cursor, keypad or the like. To define a holding pattern around a waypoint, for example, a pilot simply clicks on the waypoint, selects "hold" from a menu of task options, and enters or modifies parameters such as hold radial, hold leg distance, and hold direction, as appropriate. It is also known to provide dialog boxes in response to pilot commands to enable task parameters to be input or modified. Certain dialog boxes include graphical functionality and incorporate human factors enhancements.

A preview may be presented reflecting any modifications of the parameters presented in the dialog box while modifying the parameters; however, the preview is presented within the dialog box and is not referenced to the actual flight plan being modified. The user will not be able to see what is under the dialog box (e.g. weather, terrain, traffic, ADS-B IN information, etc.) on and around the selected waypoint. In fact, the dialog box may cover-up as much as 25% of the INAV screen including a majority of the displayed information.

Although such systems represent improvements in avionics technology, further enhancements to cockpit displays that are easier to use and create interfaces for common pilot tasks that are intuitive and easy to use may be desirable.

### SUMMARY

The present invention provides for a method of altering a flight plan comprising waypoints and segments displayed on a navigation display in the form of an interactive graphical image and a corresponding system as claimed in the accompanying claims.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

In accordance with the foregoing, there is provided such a method comprising generating symbology on the display graphically representative of a user selected task to be executed and of an associated waypoint of the flight plan, the symbology comprising an adjustable segment that intersects the waypoint. The method is characterised by, only during periods of turbulence: displaying an extension of the adjustable segment wherein the extension is displayed in a manner that distinguishes it from the adjustable segment; adjusting a bearing of the adjustable segment by dragging on the display an extremity of the extension; and altering the flight plan to reflect the bearing.

There is also provided a corresponding avionics display system for deployment onboard an aircraft that receives navigation data indicative of at least position data, and comprises a cockpit display system for receiving and displaying position data and for displaying a flight plan. A processor is operatively coupled to the cockpit display system and is configured to alter a flight plan in accordance with said method.

### BRIEF DESCRIPTION OF THE DRAWINGS

Comparative examples of the subject matter will hereinafter be described in conjunction with the following drawing figures, wherein like numerals denote like elements, and
FIG. 1 is a block diagram of an information display system suitable for use in an aircraft in accordance with one comparative example;
FIG. 2 is a graphical view of an exemplary navigational map suitable for use with the information display process of FIG. 1;
FIG. 3 illustrates an exemplary drop-down menu suitable for use in conjunction with the information display process of FIG. 1;
FIG. 4 depicts a dialog box displayed over a portion of the navigational map shown in FIG 2;
FIG. 5A depicts a displayed flight plan image on a navigational map and illustrates how the course of a hold pattern in a flight plan may be modified using the display process of FIG. 8 in accordance with a further comparative example;
FIG. 5B depicts a displayed flight plan image on a navigational map and illustrates how the leg distance of a hold pattern in a flight plan may be modified using the display process of FIG. 8 in accordance with a further comparative example;
FIG. 5C depicts a displayed flight plan image on a navigational map and illustrates how the speed of an aircraft in a hold pattern in a flight plan may be modified using the display process of FIG. 8 in accordance with a further comparative example;
FIG. 5D depicts a displayed flight plan image on a navigational map and illustrates how the turn direction of an aircraft in a hold pattern in a flight plan may be modified using the display process of FIG. 8 in accordance with a further comparative example;
FIG. 6 depicts a displayed flight plan image on a navigational map and illustrates how the flight plan may be modified using the display process of FIG. 8 in accordance with an embodiment according to the present invention; and
FIG. 7 depicts a displayed flight plan image on a navigational map and illustrates how the flight plan may be modified using the display process of FIG. 8 in accordance with yet another comparative example; and
FIG. 8 is a flowchart of a display process for modifying a flight plan in accordance with an comparative example.

### DETAILED DESCRIPTION

The following detailed description is merely exemplary in nature and is not intended to limit the subject matter of the application and uses thereof. Furthermore, there is no intention to be bound by any theory presented in the preceding background or the following detailed description.

Techniques and technologies may be described herein in terms of functional and/or logical block components and with reference to symbolic representations of operations, processing tasks, and functions that may be performed by various computing components or devices. It should be appreciated that the various block components shown in the figures may be realized by any number of hardware, software, and/or firmware components configured to perform the specified functions. For example, an comparative example of a system or a component may employ various integrated circuit components, e.g., memory elements, digital signal processing elements, logic elements, look-up tables, or the like, which may carry out a variety of functions under the control of one or more microprocessors or other control devices.

The following description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an comparative example of the depicted subject matter. In addition, certain terminology may also be used in the following description for the purpose of reference only, and thus are not intended to be limiting.

For the sake of brevity, conventional techniques related to graphics and image processing, navigation, flight planning, aircraft controls, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an comparative example of the subject matter.

Technologies and concepts discussed herein relate to display systems adapted for displaying, on a display device associated with an aircraft and adjusting the track (or path) defined by a flight plan (or travel route). A user can quickly and intuitively reposition the track of the flight plan or a segment thereof The overall workload on the user is reduced and the graphical adjustment is implemented in a manner that improves situational awareness. Although the subject matter is described herein in an aviation context, it should be understood that the subject matter may be similarly utilized in other applications involving a predefined route for travel (e.g., a travel plan or travel route) or with another vehicle (e.g., automobiles, marine vessels, trains), and the subject matter described herein is not intended to be limited to an aviation environment.

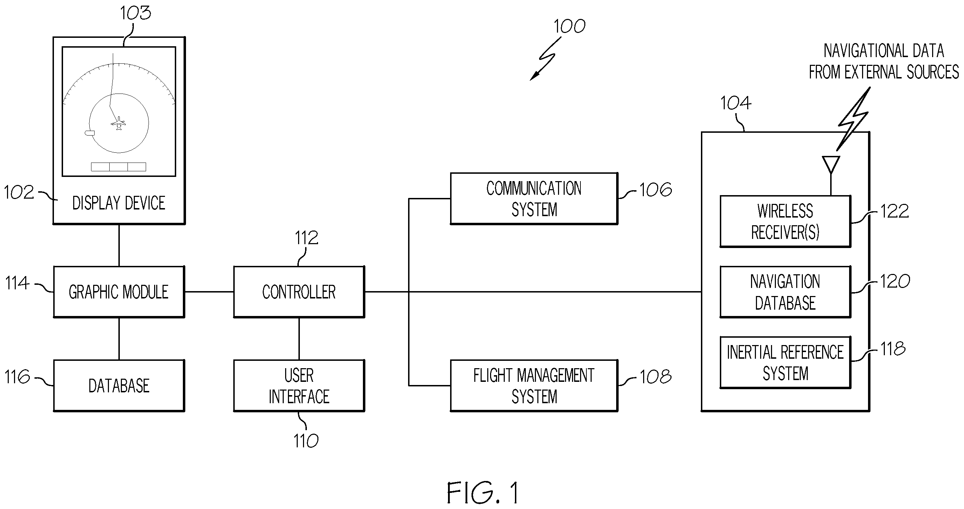

FIG. 1 depicts an exemplary comparative example of a display system 100, which may be located onboard a vehicle such as an aircraft. In an exemplary comparative example, the display system 100 includes, without limitation, a display device 102 for displaying a graphical flight plan image 103, a navigation system 104, a communications system 106, a flight management system (FMS) 108, a controller 112, a graphics module 114, a user interface 110, and a database 116 suitably configured to support operation of the graphics module 114 and display device 102, as described in greater detail below. Navigation system 104 may include an inertial reference system 118, a navigation database 120 and one or more wireless receivers 122 for receiving navigational data from external sources in the well-known manner.

It should be understood that FIG. 1 is a simplified representation of a display system 100 for purposes of explanation and ease of description and is not intended to limit the application or scope of the subject matter in any way. In practice, the display system 100 and/or the aircraft will include numerous other devices and components for providing additional functions and features, as will be appreciated in the art. For example, the display system 100 and/or the aircraft may include one or more avionics systems (e.g., a weather system, an air traffic management system, a radar system, a traffic avoidance system) coupled to the flight management system 108 and/or the controller 112 for obtaining and/or providing real-time flight-related information that may be displayed on the display device 102.

In an exemplary comparative example, the display device 102 is coupled to the graphics module 114. The graphics module 114 is coupled to the processing architecture 112, and the processing architecture 112 and the graphics module 114 are cooperatively configured to display, render, or otherwise convey one or more graphical representations or images such as a flight plan associated with operation of the aircraft on the display device 102.

As stated previously, navigational system 104 includes an inertial reference system 118, a navigation database 120, and at least one wireless receiver 122. Inertial reference system 118 and wireless receiver 122 provide controller 112 with navigational information derived from sources onboard and external to the host aircraft, respectively. More specifically, inertial reference system 118 provides controller 112 with information describing various flight parameters of the host aircraft (e.g., position, orientation, velocity, etc.) as monitored by a number of motion sensors (e.g., accelerometers, gyroscopes, etc.) deployed onboard the aircraft. By comparison, and as indicated in FIG. 1, wireless receiver 122 receives navigational information from various sources external to the aircraft. These sources may include various types of navigational aids (e.g., global position systems, non-directional radio beacons, very high frequency Omni-directional radio range devices (VORs), etc.), ground-based navigational facilities (e.g., Air Traffic Control Centers, Terminal Radar Approach Control Facilities, Flight Service Stations, and control towers), and ground-based guidance systems (e.g., instrument landing systems). In certain instances, wireless receiver 122 may also periodically receive Automatic Dependent Surveillance-Broadcast (ADS-B) data from neighboring aircraft. In a specific implementation, wireless receiver 122 assumes the form of a multi-mode receiver (MMR) having global navigational satellite system capabilities.

Navigation database 120 stores a considerable amount of information useful in flight planning. For example, navigation database 120 can contain information pertaining to the geographical location of waypoints and lists of available approaches that may be flown by an aircraft when landing at a particular runway. During flight planning, a pilot may utilize user interface 110 to designate a desired approach from a list of available approaches stored in navigational database 120. After the pilot designates the desired approach, controller 112 may then recall from navigational database 120 relevant information pertaining to the designated approach.

Controller 112 is coupled to navigation system 104 for obtaining real-time navigational data and/or information regarding operation of the aircraft to support operation of the display system 100. In an exemplary comparative example, the communications system 106 is coupled to the controller 112 and configured to support communications to and/or from the aircraft, as is appreciated in the art. The controller 112 is also coupled to the flight management system 108, which in turn, may also be coupled to the navigation system 104 and the communications system 106 for providing real-time data and/or information regarding operation of the aircraft to the controller 112 to support operation of the aircraft. In an exemplary comparative example, the user interface 110 is coupled to the controller 112, and the user interface 110 and the controller 112 are cooperatively configured to allow a user to interact with display device 102 and other elements of display system 100, as described in greater detail below.

In an exemplary comparative example, the display device 102 is realized as an electronic display configured to graphically display flight information or other data associated with operation of the aircraft under control of the graphics module 114. In an exemplary comparative example, the display device 102 is located within a cockpit of the aircraft. It will be appreciated that although FIG. 1 shows a single display device 102, in practice, additional display devices may be present onboard the aircraft. In an exemplary comparative example, the user interface 110 is also located within the cockpit of the aircraft and adapted to allow a user (e.g., pilot, co-pilot, or crew member) to interact with the remainder of display system 100 and enables a user to indicate, select, or otherwise manipulate content displayed on the display device 102, as described in greater detail below. In various comparative examples, the user interface 110 may be realized as a keypad, touchpad, keyboard, mouse, touchscreen, joystick, knob, microphone, or another suitable device adapted to receive input from a user. In preferred comparative examples, user interface 110 may be a touchscreen, cursor control device, joystick, or the like.

In an exemplary comparative example, the navigation system 104 is configured to obtain one or more navigational parameters associated with operation of the aircraft. The navigation system 104 may be realized as a global positioning system (GPS), inertial reference system (IRS), or a radio-based navigation system (e.g., VHF Omni-directional radio range (VOR) or long range aid to navigation (LORAN)), and may include one or more navigational radios or other sensors suitably configured to support operation of the navigation system 104, as will be appreciated in the art. In an exemplary comparative example, the navigation system 104 is capable of obtaining and/or determining the instantaneous position of the aircraft, that is, the current location of the aircraft (e.g., the latitude and longitude) and the altitude or above ground level for the aircraft. The navigation system 104 may also obtain and/or determine the heading of the aircraft (i.e., the direction the aircraft is traveling in relative to some reference).

In an exemplary comparative example, the communications system 106 is suitably configured to support communications between the aircraft and another aircraft or ground location (e.g., air traffic control). In this regard, the communications system 106 may be realized using a radio communication system or another suitable data link system. In an exemplary comparative example, the flight management system 108 (or, alternatively, a flight management computer) is located onboard the aircraft. Although FIG. 1 is a simplified representation of display system 100, in practice, the flight management system 108 may be coupled to one or more additional modules or components as necessary to support navigation, flight planning, and other aircraft control functions in a conventional manner.

In an exemplary comparative example, the flight management system 108 maintains information pertaining to a current flight plan (or alternatively, a current route or travel plan). In this regard, depending on the comparative example, the current flight plan may comprise either a selected or otherwise designated flight plan for subsequent execution, a flight plan selected for review on the display device 102, and/or a flight plan currently being executed by the aircraft. In this regard, as used herein, a flight plan should be understood as a sequence of navigational reference points that define a flight path or route for the aircraft. In this regard, depending on the particular flight plan and type of air navigation, the navigational reference points may comprise navigational aids, such as VHF Omni-directional ranges (VORs), distance measuring equipment (DMEs), tactical air navigation aids (TACANs), and combinations thereof (e.g., VORTACs), landing and/or departure locations (e.g., airports, airstrips, runways, landing strips, heliports, helipads, and the like), points of interest or other features on the ground, as well as position fixes (e.g., initial approach fixes (IAFs) and/or final approach fixes (FAFs)) and other navigational reference points used in area navigation (RNAV). For example, a flight plan may include an initial or beginning reference point (e.g., a departure or takeoff location), a final navigational reference point (e.g., an arrival or landing location), and one or more intermediate navigational reference points (e.g., waypoints, positional fixes, and the like) that define the desired path or route for the aircraft from the initial navigational reference point to the final navigational reference point. In this regard, the intermediate navigational reference points may define one or more airways for the aircraft en route to the final navigational reference point.

As described in greater detail below, the along track distance (or length) of the flight plan comprises the sum of all of the straight line ground distances between adjacent navigational reference points of the flight plan; i.e. the total ground distance corresponding to the route defined by the plurality of navigational reference points comprising the flight plan. For example, if the flight plan comprises three navigational reference points, the along track distance (or length) of the flight plan is equal to the sum of the straight line ground distance between a location corresponding to the first navigational reference point and a location corresponding to the second navigational reference point and the straight line ground distance between the location corresponding to the second navigational reference point and a location corresponding to the third navigational reference point.

In some comparative examples, the flight management system 108 may include a database that maintains a plurality of predefined flight plans, wherein a predefined flight plan from the database may be selected by a user via user interface 110 for use as the current flight plan. In another comparative example, the current flight plan may be uplinked via the communications system 106. Alternatively, the user may utilize the user interface 110 to manually enter or indicate the desired endpoints (e.g., the initial and final navigational reference points) for the current flight plan. Depending on the comparative example, the user may manually enter the intermediate navigational reference points (e.g., via user interface 110), or alternatively, the intermediate navigational reference points may be automatically generated by the flight management system 108 based on the endpoints (e.g., the initial and final navigational reference points) of the flight plan, as will be appreciated in the art. As described in greater detail below, in an exemplary comparative example, the controller 112 and/or graphics module 114 are configured to display and/or render information pertaining to the currently selected flight plan on the display device 102 to allow a user (e.g., via user interface 110) to review various aspects (e.g., estimated fuel requirements, estimated flight time, rates of ascent/descent, flight levels and/or altitudes, and the like) of the currently selected flight plan.

The controller 112 generally represents the hardware, software, and/or firmware components configured to facilitate the display and/or rendering of a navigational map on the display device 102 and perform additional tasks and/or functions described in greater detail below. Depending on the comparative example, the controller 112 may be implemented or realized with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. The controller 112 may also be implemented as a combination of computing devices, e.g., a combination of a digital signal processor and a microprocessor, a plurality of microprocessors, one or more microprocessors in conjunction with a digital signal processor core, or any other such configuration. In practice, the controller 112 includes processing logic that may be configured to carry out the functions, techniques, and processing tasks associated with the operation of the display system 100, as described in greater detail below. Furthermore, the steps of a method or algorithm described in connection with the comparative examples disclosed herein may be embodied directly in hardware, in firmware, in a software module executed by the controller 112, or in any practical combination thereof.

The graphics module 114 generally represents the hardware, software, and/or firmware components configured to control the display and/or rendering of a navigational map on the display device 102 and perform additional tasks and/or functions described in greater detail below. In an exemplary comparative example, the graphics module 114 accesses one or more databases 116 suitably configured to support operations of the graphics module 114, as described below. In this regard, the database 116 may comprise a terrain database, a weather database, a flight plan database, an obstacle database, a navigational database, a geopolitical database, a terminal airspace database, a special use airspace database, or other information for rendering and/or displaying content on the display device 102, as described below. It will be appreciated that although FIG. 1 shows a single database 116 for purposes of explanation and ease of description, in practice, numerous databases will likely be present in a practical comparative example of the display system 100.

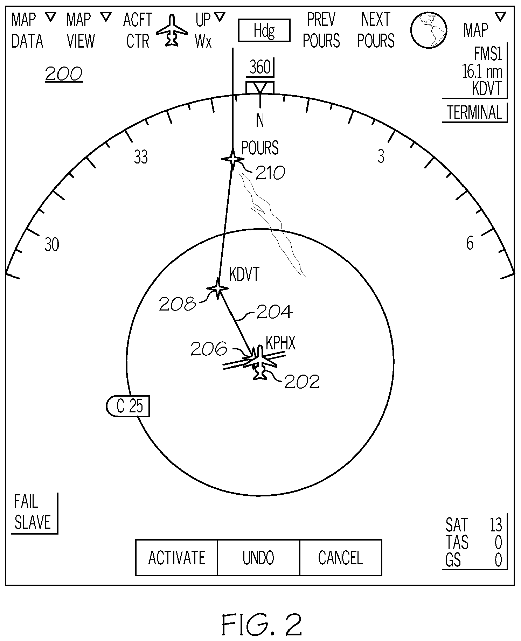

FIG. 2 is an exemplary display 200 of a graphical flight plan image that may be shown on display device 102 in display system 100 (FIG. 1). With reference to FIG. 2, display 200 suitably includes an aircraft indicator 202 on a flight plan indicator 204, which shows the path to be flown by the aircraft. The flight plan may be marked by a series of way points such as waypoints 206, 208 and 210 on FIG. 2. Each waypoint may correspond to a navigational aid, an airport, or any other point on a map. The flight plan shown in FIG. 2, for example, shows the aircraft flying from waypoint KPHX to waypoint KDVT 214, then turning toward waypoint POURS, and continuing on. A typical flight plan image may be represented as a series of flight segments from waypoint to waypoint, terminating at a destination airport. Changes to the flight plan, then, may be made by adding, removing or adjusting waypoints. It is known to accomplish this with a flight management system (FMS) or through graphical manipulation of the waypoints on the display by the pilot.

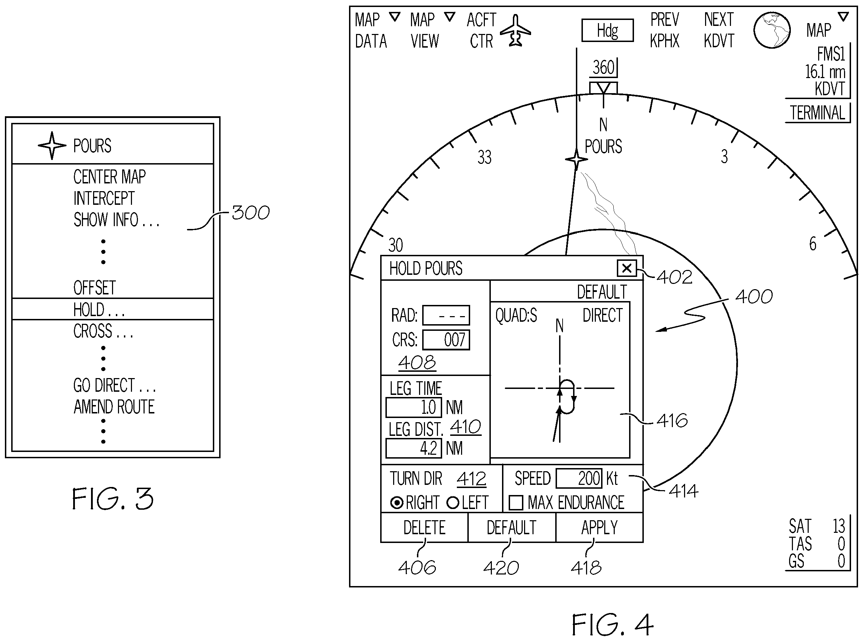

With reference now to FIG. 3, it is also known to provide pilots with further options by permitting a pilot to activate an options menu 300, which may be a pull-down window. The pilot may activate menu 300 by pointing to a waypoint with a cursor and, for example, clicking. After the pilot activates the menu, a number of options are suitably presented to the pilot, who may choose an action associated with the particular waypoint. In the exemplary options menu 300 shown in FIG. 3, for example, the pilot may select "Center Map", "Intercept", Show Info...", "Offset", "Hold", "Cross...", "Go Direct... ", "Amend Route", and the like. To select an option from the options menu 300, the pilot suitably indicates the desired option (e.g. by positioning the cursor over the option, by scrolling through the options with a button or knob, by depressing a key on a keypad, or the like) and activates the selection by depressing a button or otherwise indicating the desired option through user interface 110 (FIG. 1). Of the options shown in exemplary menu 300, the four options "Go Direct ...", "Cross ...", "Hold ..." and "Show Info" contain a succession of periods to indicate that further information is available in the form of a dialog box. A number of these exemplary options are discussed below, and the skilled practitioner will realize that options may be added or deleted. After the pilot selects an option, a dialog box may be presented on display device 102 to provide additional detail about the selected option, or to obtain additional information about the selection.

FIG. 4 shows an exemplary dialog box 400 for a hold pattern about a waypoint "POURS". Exemplary "Hold" dialog box suitably includes a cancel button 402, an "apply" button 418, and a "delete" button 406. Buttons 406 and 418 suitably cancel and apply, respectively, the changes made by the pilot since opening box 400. Delete button 406 suitably deletes the changes entered by the pilot but does not close dialog box 400, as the cancel button 402 does. An optional "Default" button 420 may also be activated to retrieve hold information related to the waypoint from the navigation database 120 or other appropriate source.

Referring still to FIG. 4, a pilot may define a holding pattern about a waypoint, by selecting an outbound radial from the waypoint or a course heading in box 408, a leg time or distance in box 410, a "left" or "right" turning scheme in box 412, and a desired airspeed in box 414. Although the values shown in FIG. 4 relate to conventional aviation units used in the United States (e.g. knots, nautical miles, and the like), it will of course be appreciated that these units could be converted or displayed using any system of measurements, including, e.g., System International (SI) units. Airspeed, for example, could be displayed in knots, kilometers/second, Mach number, or any other units.

A graphical reproduction 416 is generated and shows a portion of the flight plan (FIG. 2) and, in addition, shows a graphical layout of the holding pattern defined in boxes 408, 410, 412 and 414. This pattern may change as the pilot changes the inputs in the relevant boxes to provide a graphical rendering of the holding pattern being entered. This graphical reproduction 416 requires the pilot to construct and review a holding pattern before clicking on the "Apply" button 418. Graphical reproduction 416 is sensitive to pilot input such that the pilot is allowed to suitably adjust the course or radial on the reproduction flown in response to input from the pilot via a mouse, keyboard, knob, or the like. In addition, alternate courses may be displayed on graphical reproduction 416 in response to commands from the pilot. The pilot then selects a desired course when the desired course appears on reproduction 416, as appropriate.

Unfortunately, that portion of the flight plan that appears in the dialog box is only a preview of the proposed flight plan, and the change is not seen in the context of the entire flight plan. Further, the dialog box may occupy a large portion of the display and therefore blocks and hides that portion of the display beneath the dialog box including portions of the existing flight plan, terrain, weather, traffic, and ADS-B IN data. The problem is exacerbated because the dialog box is stationery and cannot be moved as, for example, by dragging with a cursor to reveal what is underneath. In addition, the flight plan change is accomplished by adjusting values in the dialog box, which may be problematic.

It is contemplated that the comparative examples described herein provide a system and method for producing and/or modifying a flight plan in a manner that provides immediate feedback to the pilot by utilizing direct graphical entry on the existing flight plan graphic using, for example, a touchscreen on cursor type input device. The result may be characterized as a what-you-see-is-what-you-get (WYSIWYG) device and procedure for changing a flight plan that increases a pilot's situational awareness by permitting modification of the flight plan directly on the existing flight plan display and not on a reproduction thereof and without covering or hiding any substantial portion of the display or the features being displayed on the display including the existing flight plan, weather, traffic, and the like.

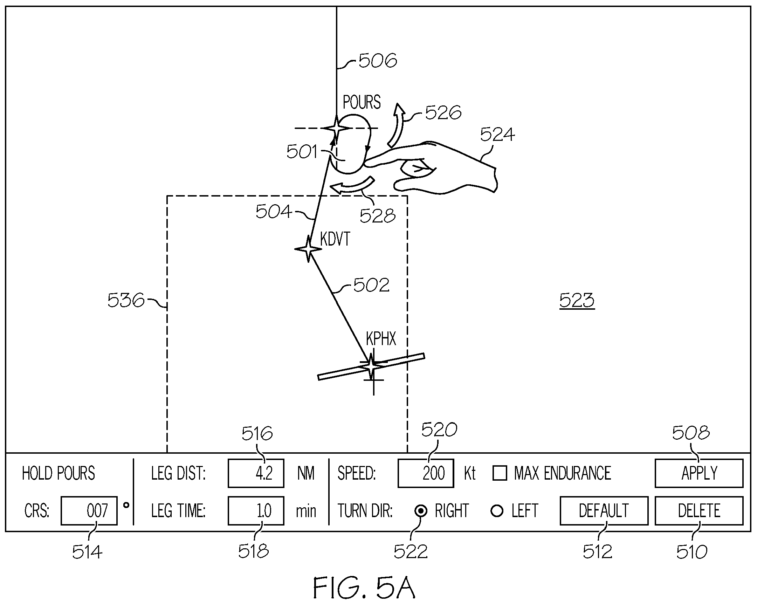

FIG. 5A illustrates an interactive graphical display of a flight plan image 500 comprised of segments 502, 504, and 506 and including waypoints KPHX, KDVT, and POURS, and wherein a pilot or other crew member wishes to insert a hold pattern 501 at waypoint POURS in accordance with an comparative example. Once again, the display 500 includes APPLY, DELETE, and DEFAULT buttons 508, 510, and 512, respectively, as was the case in the dialog box 400 in FIG. 4. Also, the display includes boxes that define the holding pattern; i.e. course (CRS) 514, Leg. Dist. 516, Leg Time 518, Speed 520, and Turn Direction 522, also similar to those shown in the dialog box 400. However, unlike the process described in connection with FIG. 4, the pilot or crew member is not required to adjust the values in these boxes to view the corresponding result of the adjustments on a reproduction of a portion of flight plan 416 displayed in the dialog box. It should be understood, however, that a pilot or user may adjust the values in (1) these boxes, (2) on the touch screen using gestures, or (3) on a non-touch screen using a cursor control device, and a change in any one will be automatically reflected in the others.

In accordance with an comparative example, after the HOLD task is selected from a menu such as the one shown in FIG. 3, a Hold pattern is produced at waypoint POURS, and the parameters of the Hold pattern such as course, leg distance, speed, turn direction, etc. may be altered by adjusting the hold pattern image on the flight plan display itself by way of, for example, a touchscreen 523 as is illustrated at 524. The pilot or crew member may alter the course of the hold pattern by dragging their finger or a stylus in the appropriate direction as is indicated by arrows 526 and 528. The information contained in information boxes 514-522 will reflect the movement on touchscreen 523. That is, signals created by movement along touchscreen 523 are sensed by graphics module 114 (FIG. 1) and continuously transmitted to controller 112 where they are converted to reflect their numerical equivalents. The flight plan change produced by movement along touchscreen 523 as reflected on the flight plan itself may be deleted by touching DELETE button 510 or accepted by touching APPLY button 508. Thus, the pilot or crew member is effectuating the flight plan change on the flight plan image itself as opposed to doing so on a reproduced portion of the flight plan thus giving the pilot or crew member the benefit of viewing the change in the context of the entire flight plan including traffic, weather, terrain, and ADS-B IN (not shown for clarity) much of which would be hidden if the dialog box approach were used. In fact, dashed rectangle generally illustrates the area that would be blocked by such a dialog box.

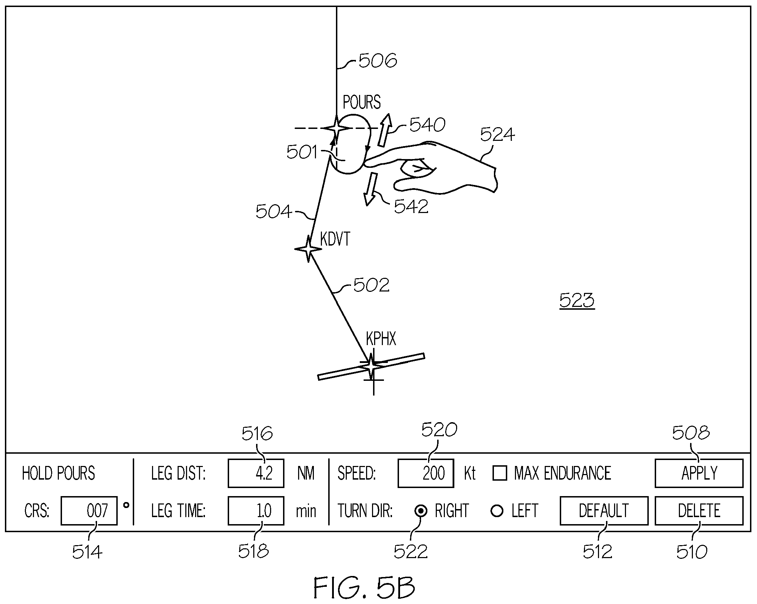

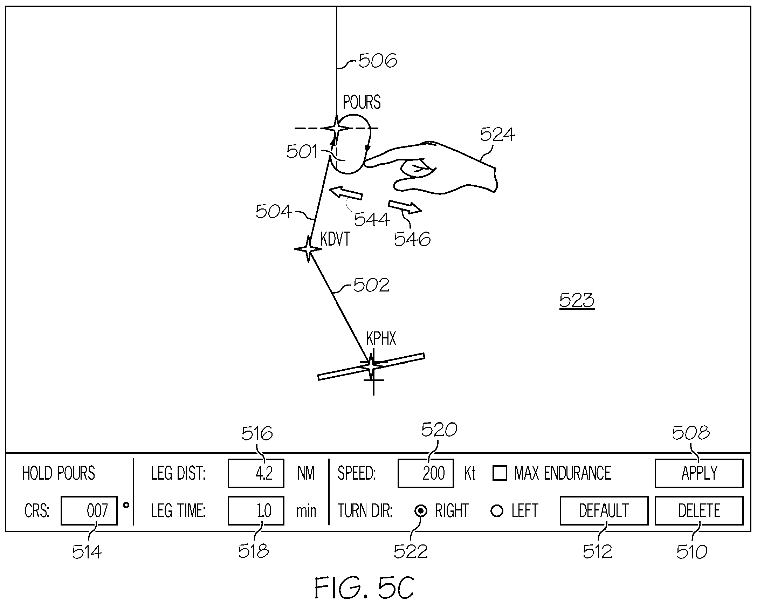

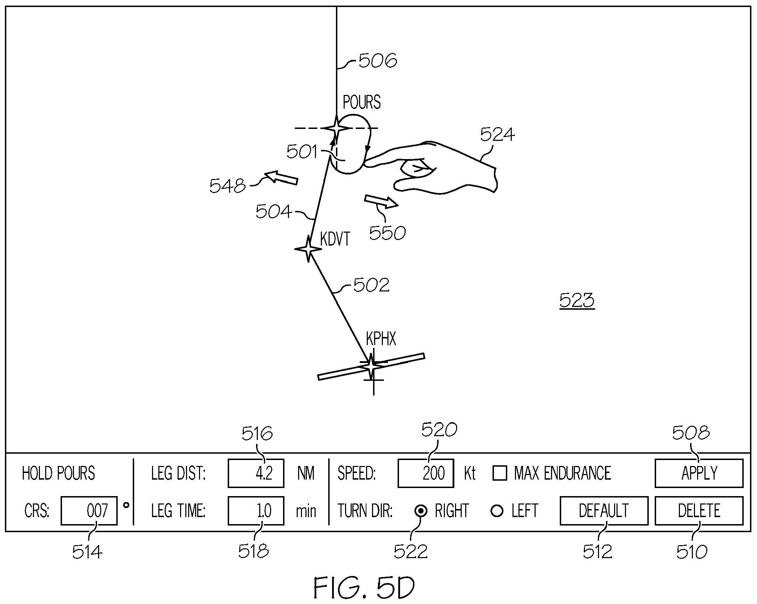

It should be clear that while the above described comparative examples have been described in connection with a touchscreen input device, the principles described are equally applicable to the use of other input devices (110 on FIG. 1) such as a cursor control input device. In addition, it should be clear that the gestures suggested in FIG. 5A and associated with producing the desired flight plan alterations are only exemplary. Other gestures may be utilized to achieve desired results. For example, FIG. 5B depicts a displayed flight plan image on a navigational map and illustrates how the leg distance of a hold pattern may be modified using circular gestures represented by arrows 540 and 542. FIG. 5C depicts a displayed flight plan image on a navigational map and illustrates how the speed of an aircraft in a hold pattern may be modified with linear gestures perpendicular to the orientation of the holding pattern as represented by arrows 544 and 546. FIG. 5D depicts a displayed flight plan image on a navigational map and illustrates how the turn direction of an aircraft in a hold pattern may be modified (flipped over to the other side of waypoint POURS) using linear gestures represented by arrows 548 and 550 perpendicular to the orientation of the holding pattern (similar to those used to adjust speed), except that in this case the gestures go past the center line.

These gestures may be differentiated from those associated with speed. For example, in FIG. 5D, the holding pattern is a right turn holding pattern. When the user moves his finger towards POURS (i.e. left), the hold pattern may shrink in dimension until it reaches a minimum as determined by the flight management system. As the user applies pressure to continue movement towards the other side, the turn direction is flipped over to the left, and the pattern assumes the dimensions it had before it started to shrink. Thus, only the turn direction is altered and all other parameters remain unaltered.

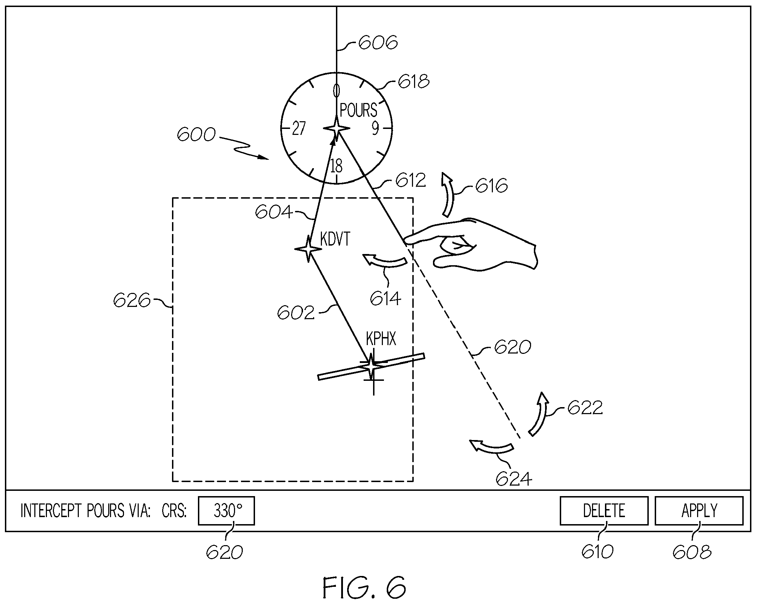

FIG. 6 illustrates an interactive graphical display in accordance with a embodiment according to the present invention. Flight plan image 600 is comprised of segments 602, 604, and 606, and, once again, includes waypoints KPHX, KDVT, and POURS. In this embodiment, a pilot or other crew member has selected an INTERCEPT task, for example 330°, at waypoint POURS. As was the case previously, the display includes APPLY and DELETE buttons 608 and 610, respectively. Controller 112 (FIG. 1), in conjunction with database 116, and graphics module 114 recognizes the selection and produces a segment 612 that intersects the waypoint and has a length determined by controller 112 and/or FMS 108. In addition, controller 112 in cooperation with graphics module 114 enable dragging segment 612 (i.e. by finger, stylus, cursor etc.) such that it may be rotated clockwise or counterclockwise about waypoint POURS as indicated by arrows 614 and 616, respectively. As segment 616 is rotated about waypoint POURS, the intercept bearing is represented graphically on compass 618 and numerically in box 620.

Controller 112 (FIG. 1), FMS 108, and graphics module 114 may also cooperate to permit an elastic method for fine-tuning a parameter to be adjusted; i.e. controlling the gain associated with the parameter being modified in a manner that increases accuracy. Thus, extension 620 (indicated as dashed, for example) is produced which, when rotated at its extremity as indicated by arrows 622 and 624, has the effect of fine tuning the intercept bearing, which is especially advantageous during periods of turbulence. That is, accurate tuning is facilitated by reducing the gain associated with moving segment 612. After appropriate tuning, the pilot may press APPLY button 608 to alter the flight plan. For comparison purposes only, rectangle 626 illustrates the approximate area that would be hidden from view if the previously described dialog box approach were utilized. It should be noted that this elastic method of altering a parameter may or may not be applicable to a given parameter at all times, and may be employed only when deemed necessary; e.g. during periods of turbulence.

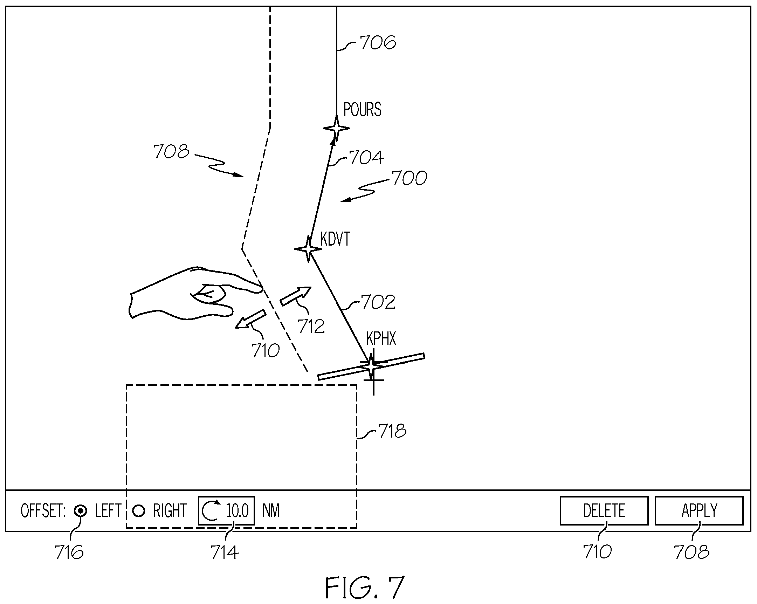

FIG. 7 illustrates an interactive graphical display of a flight plan image 700 in accordance with a still further comparative example. In a similar fashion, flight plan image 700 includes segments 702, 704, and 706 and waypoints KPHX, KDVT, and POURS. In this comparative example, a pilot or other crew member has selected an Offset task from, for example, a drop-down menu of the type shown in FIG. 3, in this case requiring an offset of ten nautical miles (NM) to the left.

It is to be noted that the minimum and maximum values of the dimensions of the patterns being modified (e.g. the length and breadth of a hold operation (FIG.5), the length of the vector in the case of an intercept operation (FIG. 6), and the distance from the center line (the actual flight plan) in the case of an offset operation (FIG.7)) are controlled by the flight management system and are instantaneously available to the user.

Controller 112 (FIG. 1) in conjunction with database 116 and graphics module 114 recognizes the selection on the drop-down menu, produces a left offset image shown as dashed line 708 in FIG. 7, and permits the dragging of the flight plan offset 708 and previously described such that it may be moved left or right of the flight plan as is shown by arrows 710 and 712, respectively. As the offset is moved, the offset distance in NM is reflected in box 714, and the direction, in this case "Left", is indicated at 716. When satisfied, the pilot or crew member may touch the APPLY button 708 to effectuate the change, or if dissatisfied, may delete the proposed change by touching the DELETE button 710. Once again, dashed rectangle 718 illustrates the approximate area that would be hidden from view if the previously described dialog box approach were used to produce a flight plan offset.

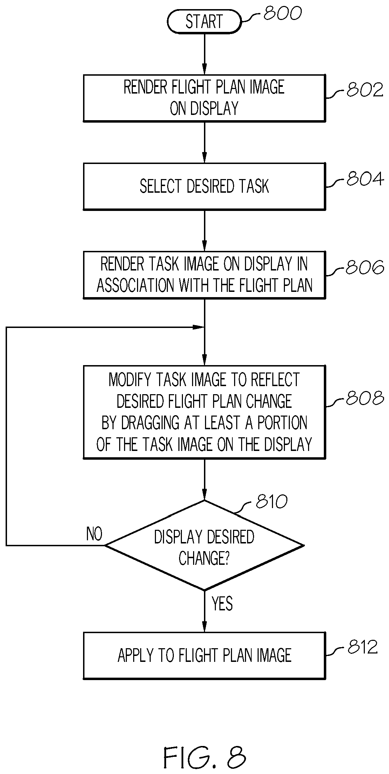

FIG. 8 is a flowchart 800 of a display process for modifying a flight plan in accordance with an comparative example. In STEP 802, a flight plan image of the type shown in FIG. 2 is rendered on a display (e.g. 102 in FIG. 1). When the pilot wishes to modify the flight plan, the pilot may select a task from, for example, a drop-down menu of tasks (e.g. Hold, Intercept, Offset, etc.) as previously described in connection with FIG. 3 (STEP 804). A task image or template is then rendered on the flight plan display image itself and in close association with the current flight plan and is characterized by one or more parameters (e.g. Offset distance, Bearing, Leg Length, etc.) as previously described (STEP 806). The task image may then be altered by dragging (e.g. with a finger or stylus in the case of a touchscreen display, a cursor control device, or the like) at least a portion of the task image; e.g. a segment to change bearing, hold pattern, offset and the like. When the desired change has been achieved (STEP 810), the flight plan image may be altered (STEP 812).

Thus, it should be appreciated that there has been provided a system and method for producing and/or modifying a flight plan in a manner that provides immediate feedback to the pilot and that utilizes direct graphical entry on the existing flight plan image thus avoiding the need for dialog boxes that block portions of the display including traffic, weather, terrain, ADS-B IN, and the existing flight plan itself. While an exemplary embodiment of the present invention has been described above in the context of a fully functioning computer system (i.e., avionics display system 10), those skilled in the art will recognize that the mechanisms of the present invention are capable of being distributed as a program product (i.e., an avionics display program) and, furthermore, that the teachings of the present invention apply to the program product regardless of the particular type of computer-readable media (e.g., floppy disc, hard drive, memory card, optical disc, etc.) employed to carry-out its distribution.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of altering a flight plan comprising waypoints and segments (602, 604, 606) displayed on a navigation display in the form of an interactive graphical image, the method comprising:
generating symbology on the display graphically representative of a user selected task to be executed and of an associated waypoint of the flight plan, the symbology comprising an adjustable segment (612) that intersects the waypoint;
**characterised by**, only during periods of turbulence:
displaying an extension (620) of the adjustable segment (612) wherein the extension (620) is displayed in a manner that distinguishes it from the adjustable segment (612);
adjusting a bearing of the adjustable segment by dragging on the display an extremity of the extension (620); and
altering the flight plan to reflect the bearing.

2. A method according to Claim 1 wherein the extension (620) is a broken line.

3. A method according to Claim 1 wherein the adjustable segment (612) and the extension (620) are displayed as different colors.

4. An avionics display system for deployment onboard an aircraft that receives navigation data indicative of at least position data, the system comprising:
a cockpit display system for receiving and displaying position data and for displaying a flight plan; and
a processor operatively coupled to the cockpit display system and configured to alter a flight plan in accordance with a method as claimed in the preceding claims.

## Patentansprüche

1. Verfahren zum Ändern eines Flugplans, der Wegpunkte und Segmente (602, 604, 606) umfasst, die auf einer Navigationsanzeige in Form eines interaktiven grafischen Bildes angezeigt werden, wobei das Verfahren Folgendes umfasst:
Erzeugen von Symbologie auf der Anzeige, die eine benutzerausgewählte auszuführende Aufgabe und einen assoziierten Wegpunkt des Flugplans grafisch repräsentiert, wobei die Symbologie ein einstellbares Segment (612) umfasst, das den Wegpunkt schneidet;
**gekennzeichnet durch**, nur während Turbulenzen:
Anzeigen einer Verlängerung (620) des einstellbaren Segments (612), wobei die Verlängerung (620) auf eine Art und Weise angezeigt wird, die sie vom einstellbaren Segment (612) unterscheidet;
Einstellen eines Kurses des einstellbaren Segments durch Ziehen eines äußeren Endes der Verlängerung (620) auf der Anzeige; und
Ändern des Flugplans, um den Kurs widerzuspiegeln.

2. Verfahren nach Anspruch 1, wobei die Verlängerung (620) eine gestrichelte Linie ist.

3. Verfahren nach Anspruch 1, wobei das einstellbare Segment (612) und die Verlängerung (620) als unterschiedliche Farben angezeigt werden.

4. Avionikanzeigesystem für den Einsatz an Bord eines Luftfahrzeugs, das Navigationsdaten empfängt, die zumindest Positionsdaten angeben, wobei das System Folgendes umfasst:
ein Cockpit-Anzeigesystem zum Empfangen und Anzeigen von Positionsdaten und zum Anzeigen eines Flugplans; und
einen Prozessor, der funktionsfähig mit dem Cockpit-Anzeigesystem gekoppelt ist und dazu ausgelegt ist, einen Flugplan gemäß einem Verfahren nach einem der vorangegangenen Ansprüche zu ändern.

## Revendications

1. Procédé de modification d'un plan de vol comprenant des points de cheminement et des segments (602, 604, 606) affichés sur un affichage de navigation sous la forme d'une image graphique interactive, le procédé comprenant :
la génération d'une symbologie sur l'affichage représentant graphiquement une tâche sélectionnée par un utilisateur appelée à être exécutée et un point de cheminement associé du plan de vol, la symbologie comprenant un segment ajustable (612) qui coupe le point de cheminement ;
**caractérisé par**, uniquement au cours de périodes de turbulence :
l'affichage d'un prolongement (620) du segment ajustable (612), le prolongement (620) étant affiché d'une manière qui le différencie du segment ajustable (612) ;
l'ajustement d'un relèvement du segment ajustable par glissement, sur l'affichage, d'une extrémité du prolongement (620) ; et
la modification du plan de vol compte tenu du relèvement.

2. Procédé selon la revendication 1, dans lequel le prolongement (620) est une ligne discontinue.

3. Procédé selon la revendication 1, dans lequel le segment ajustable (612) et le prolongement (620) sont affichés en couleurs différentes.

4. Système d'affichage avionique destiné à être déployé à bord d'un aéronef qui reçoit des données de navigation indiquant au moins des données de position, le système comprenant :
un système d'affichage de cockpit destiné à recevoir et afficher des données de position et destiné à afficher un plan de vol ; et
un processeur couplé fonctionnellement au système d'affichage de cockpit et configuré pour modifier le plan de vol conformément à un procédé selon les revendications précédentes.
